Europäisches Patentamt

European Patent Office

Office européen des brevets

(11) Veröffentlichungsnummer: **0 212 242**
**B1**

(12) **EUROPÄISCHE PATENTSCHRIFT**

(45) Veröffentlichungstag der Patentschrift: **04.04.90**

(51) Int. Cl.⁵: **H 02 P 1/44**

(21) Anmeldenummer: **86109624.6**

(22) Anmeldetag: **14.07.86**

(54) **Schaltungsanordnung, bei der ein mit Wechselstrom gespeister Verbraucher mit einer Kondensatoreinheit in Reihe liegt.**

(30) Priorität: **26.07.85 DE 3526849**

(43) Veröffentlichungstag der Anmeldung:
**04.03.87 Patentblatt 87/10**

(45) Bekanntmachung des Hinweises auf die
Patenterteilung:
**04.04.90 Patentblatt 90/14**

(84) Benannte Vertragsstaaten:
**AT CH DE FR GB IT LI NL SE**

(56) Entgegenhaltungen:
**DE-A-2 820 950**
**DE-A-3 206 187**

(73) Patentinhaber: **Siemens Aktiengesellschaft**
**Wittelsbacherplatz 2**
**D-8000 München 2 (DE)**

(72) Erfinder: **Ghosh, Shyamal-Krishna, Dipl.-Ing.**
**Hohenrother Strasse 22**
**D-8740 Bad Neustadt/Saale (DE)**
Erfinder: **Sturm, Emil, Dipl.-Ing.**
**Sandstrasse 22**
**D-8741 Niederlauer (DE)**

Courier Press, Leamington Spa, England.

**Beschreibung**

Die Erfindung betrifft eine Schaltungsanordnung, bei der ein mit Wechselstrom gespeister Verbraucher mit einer für Wechselspannungsanschluß geeigneten Kondensatoreinheit in Reihe geschaltet ist.

Eine solche Schaltungsanordnung ist durch die DE—A—32 06 187 bekannt. Für den Anlauf eines einphasigen Asynchronmotors ist bei dieser Schaltungsanordnung ein bipolarer Elektrolyt-Kondensator mit der Hilfswicklung des Asynchronmotors in Reihe geschaltet. Da die Lebensdauer eines solchen Kondensators zu der Größe des ihn durchfließenden Stromes und der Zeitdauer des Stromflusses umgekehrt proportional ist, wird der Kondensator nach dem Anlauf des Asynchronmotors bald möglichst abgeschaltet.

Es gibt häufig auch Anwendungsfälle, bei denen während der gesamten Betriebszeit des Asynchronmotors die mit dem Kondensator in Reihe liegende Hilfswicklung eingeschaltet bleiben soll. In solche Fällen muß neben dem als Elektrolyt-Kondensator ausgeführten Anlaufkondensator noch ein weiterer, für den Dauerbetrieb mit Wechselspannung geeigneter Metall-Papier-Kondensator vorgesehen werden. Solche Kondensatoren sind sehr teuer.

In der EP—A—0 210 524, die vom gleichen Anmelder ausgeht und mit gleichem Prioritätstag wie die vorliegende Anmeldung eingereicht wurde, wird zur Verlängerung der Lebensdauer der mit einem Wechselstromverbraucher in Reihe liegenden Kondensatoreinheit vorgeschlagen, daß diese aus zwei Kondensatoren besteht und jedem Kondensator eine Gleichrichterdiode parallel geschaltet ist, wobei die Gleichrichterdioden in Bezug auf ihre Durchlaßrichtung gegensinnig zu den Kondensatoren parallel geschaltet sind.

Der Erfindung liegt die Aufgabe zugrunde, eine Schaltungsanordnung der eingangs beschriebenen Art so auszubilden, daß für den Betrieb eines Wechselstromverbrauchers Kondensatoren verwendet werden können, die normalerweise nur für Gleichspannungsbetrieb geeignet sind.

Die Lösung der gestellten Aufgabe gelingt nach der Erfindung dadurch, daß die Kondensatoreinheit aus zwei gepolten Kondensatoren besteht, die mit dem Verbraucher so in Reihe geschaltet sind, daß die Kondensatoren entweder direkt oder über den Verbraucher mit gleichnamigen Polen miteinander verbunden sind, daß ferner jedem Kondensator eine Gleichrichteriode zugeordnet ist, wobei die Gleichrichterdiode mit ihrer Kathode mit dem Pluspol und mit ihrer Anode mit dem Minuspol des zugehörigen Kondensators verbunden ist. Bei dieser Ausbildung der Schaltungsanordnung werden die Kondensatoren abwechselnd jeweils nur in der ihrer Polung entsprechenden einen Richtung durch die entsprechenden Halbwelle der Wechselspannung aufgeladen. Während der anderen, ihrer Polung entgegengerichteten Halbwelle sind die Kondensatoren durch die Gleichrichterdiode überbrückt. In jeder Halbwelle der Wechselspannung ist somit ein Kondensator wirksam, so daß in dem Verbraucher ein phasenverschobener Wechselstrom fließt. Ist als Verbraucher die Hilfswicklung eines einphasigen Induktionsmotors vorgesehen, so wird durch die von den Kondensatoren bewirkte Phasenverschiebung des Stromes in der Hilfswicklung gegenüber dem Strom in der Hauptwicklung das für den Anlauf des Motors notwendige Drehfeld sichergestellt.

Anhand eines in der Zeichnung dargestellten Ausführungsbeispieles wird der Anmeldungsgegenstand nachfolgend näher beschrieben. Es zeigt:

Fig. 1 eine Schaltungsanordnung, bei der die Kondensatoren über die Hilfswicklung eines einphasigen Induktionsmotors miteinander verbunden sind und

Fig. 2 eine Schaltungsanordnung, bei der die Kondensatoren direkt miteinander verbunden sind.

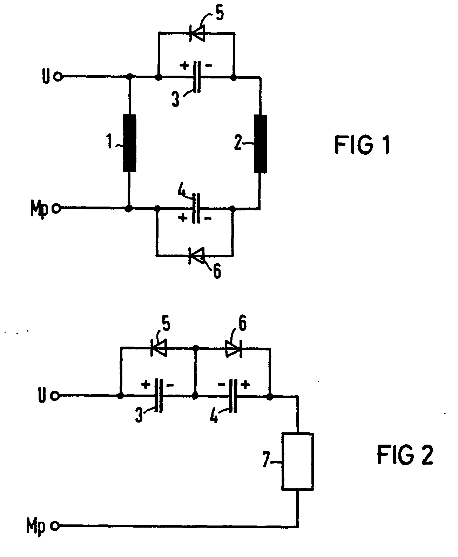

Bei der Schaltungsanordnung nach Fig. 1 ist an die Netzklemmen U und M$_p$ die Hauptwicklung 1 des einphasigen Induktionsmotors angeschlossen. Parallel zu der Hauptwicklung 1 ist ferner eine aus der Hilfswicklung 2 und zwei gepolten Kondensatoren 3 und 4 bestehende Reihenschaltung an die Netzklemmen U und M$_p$ angeschlossen. Bei dieser Reihenschaltung liegt die Hilfswicklung 2 zwischen den beiden gepolten Kondensatoren 3 und 4, wobei die beiden Kondensatoren 3 und 4 mit gleichnamigen Polen (gemäß der Darstellung in der Zeichnung jeweils mit ihrem Minuspol) mit dem entsprechenden Anschlußende der Hilfswicklung 2 verbunden sind. Mit ihren anderen gleichnamigen Polen (Pluspol) sind die beiden Kondensatoren 3 und 4 mit den Netzklemmen U bzw. M$_p$ verbunden. Es besteht die Möglichkeit, in dem Hilfswicklungskreis auch einen Unterbrecherschalter anzuordnen, so daß die Hilfswicklung 2, wenn dies erwünscht ist, während des Betriebes abgeschaltet werden kann.

Gemäß der in Fig. 2 dargestellten Schaltungsanordnung sind die beiden Kondensatoren 3 und 4 mit ihren Minuspolen direkt miteinander verbunden und mit einem beliebigen Wechselstromverbraucher 7 in Reihe geschaltet. Die Kondensatoren 3 und 4 können auch mit ihren Pluspolen direkt miteinander verbunden werden. Der Wechselstromverbraucher kann selbstverständlich auch die Hilfswicklung 2 des Induktionsmotors sein.

Bei beiden Schaltungsvarianten ist zu jedem der gepolten Kodnensatoren 3 und 4 eine Gleichrichterdiode 5 bzw. 6 derart parallelgeschaltet, daß die Anode der jeweiligen Gleichrichterdiode 5 bzw. 6 mit dem Minuspol und die Kathode der jeweiligen Gleichrichteriodide 5 bzw. 6 mit dem Pluspol des betreffenden Kondensators 3 bzw. 4 verbunden ist.

Die Schaltungsanordnung nach Fig. 1 arbeitet wie folgt:

Bei positiver Halbwelle der anliegenden Wechselspannung wird der Kondensator 3 aufgeladen, wobei der Ladestrom über die Hilfswicklung 2 und die Gleichrichterdiode 6 zu der Netzklemme M$_p$ fließt. Durch die folgende negative halbwelle wird der Kondensator 4 aufgeladen und der Ladestrom fließt nunmehr in der entgegengesetzten richtung durch die Hilfswicklung 2 und über die Gleichrichterdiode 5 zur Netzklemme U. Gleichzeitig entlädt sich der Kondensator 3 über das Netz, so daß er bei derfolgenden positiven Halbwelle wieder aufgeladen werden kann. Während dieser folgenden positiven Halbwelle erfolgt dann eine Entladung des anderen Kondensators, 4, der während der nächsten negativen Halbwelle wieder aufgeladen wird. Wie die Erläuterung zeigt, fließt in der Hilfswicklung ein Wechselstrom, der durch die kapazitive Wirkung der Kondensatoren 3 und 4 gegenüber dem Strom in der Hauptwicklung 1 phasenverschoben ist, so daß sich ein Drehfeld ausbilden kann.

Bei der Schaltungsanordnung nach Fig. 2 wird der Kondensator 3 ebenfalls bei positiver Halbwelle der Wechselspannung aufgeladen. Der Ladestrom fließt dann über die Gleichrichterdiode 6 weiter zu dem Verbraucher 7 und zu der Netzklemme M$_p$. Während der negativen Halbwelle wird der andere Kondensator 4 geladen, wobei der Strom von der Netzklemme M$_p$ über den Verbraucher 7, den Kondensator 4 und die Gleichrichterdiode 5 zur Netzklemme U fließt. Gleichzeitig entlädt sich der Kondensator 3 während der negativen Halbwelle. Die Entladung des Kondensators 4 erfolgt dann bei der nachfolgenden positiven Halbwelle.

Die Kondensatoren 3 und 4 werden infolge der beschriebenen Parallelschaltung der Gleichrichterdioden 5 und 6 stets nur in der ihrer Polung entsprechenden Richtung aufgeladen und entladen sich jeweils während der ihrer Polung entgegengerichteten Spannungshalbwelle. Es folgt somit kein Umladen, sondern nur ein Auf- und Entladen der Kondensatoren 3 und 4. Somit können für Gleichspannungsbetrieb geeignete, gepolte Kondensatoren verwendet werden. Derartige Kondensatoren sind wesentlich preiswerter als entsprechende für Wechselspannungsdauerbetrieb geeignete Metall-Papier-Kondensatoren. Die gepolten Kondensatoren können bei entsprechender Bemessung dauernd eingeschaltet bleiben, so daß keine gesonderten Kondensatoren für den Anlauf und den Betrieb eines Induktionsmotors erforderlich sind.

## Patentanspruch

Schaltungsanordnung, bei der ein mit Wechselstrom gespeister Verbraucher mit einer für Wechselspannungsanschluß geeigneten Kondensatoreinheit in Reihe geschaltet ist, dadurch gekennzeichnet, daß die Kondensatoreinheit aus zwei gepolten Kondensatoren (3, 4) besteht, die mit dem Verbraucher (2 bzw. 7) so in Reihe geschaltet sind, daß die Kondensatoren (3, 4) entweder direkt oder über den Verbraucher (2) mit gleichnamigen Polen miteinander verbunden sind, daß ferner jedem Kondensator (3 bzw. 4) eine Gleichrichterdiode (5 bzw. 6) zugeordnet ist, wobei die Gleichrichterdiode (5 bzw. 6) mit ihrer Kathode mit dem Pluspol und mit ihrer Anode mit dem Minuspol des zugehörigen Kondensators (3 bzw. 4) verbunden ist.

## Revendication

Montage dans lequel un appareil d'utilisation alimenté par un courant alternatif est branché en série avec une unité à condensateurs convenant pour être raccordée à une tension alternative, caractérisé par le fait que l'unité à condensateurs est constituée de deux condensateurs (3, 4), qui sont branchés en série avec l'appareil d'utilisation (2 ou 7), de telle sorte que les condensateurs (3, 4) sont reliés entre eux soit directement, soit par l'intermédiaire de l'appareil d'utilisation (2), par des pôles de même nom, et qu'en outre une diode redresseuse (5 ou 6) est associée à chaque condensateur (3 ou 4), la diode redresseuse (5 ou 6) étant reliée par sa cathode au pôle positive et par son anode au pôle négatif du condensateur associé (3 ou 4).

## Claim

Circuit arrangement in which a consumer supplied with alternating current is connected in series to a capacitor unit suitable for an alternating voltage connection, characterised in that the capacitor unit consists of two polarised capacitors (3, 4), which are connected in series to the consumer (2 or 7), such that the capacitors (3, 4) are connected together either directly or by way of the consumer (2) with like poles, in that furthermore a rectifier diode (5 or 6) is associated with each capacitor (3 or 4), wherein the rectifier diode (5 or 6) is connected with its cathode to the positive pole and with its anode to the negative pole of the capacitor (3 or 4) belonging thereto.

EP 0 212 242 B1

FIG 1

FIG 2